# EUROPEAN PATENT SPECIFICATION

(11) **EP 3 565 366 B1**
(45) Date of publication and mention of the grant of the patent: **30.12.2020**
(21) Application number: 17892773.7
(22) Date of filing: 23.01.2017
(51) Int. Cl.: H04W 74/08

(54) **METHOD FOR RANDOM ACCESS, AND TERMINAL DEVICE AND NETWORK DEVICE**
VERFAHREN FÜR DIREKTZUGRIFF SOWIE ENDGERÄTEVORRICHTUNG UND NETZWERKVORRICHTUNG
PROCÉDÉ D'ACCÈS ALÉATOIRE, DISPOSITIF TERMINAL, ET DISPOSITIF DE RÉSEAU

(43) Date of publication of application: 06.11.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/072290
(87) International publication number: WO 2018/133128

(56) References cited:
- WO-A1-2016/186542
- CN-A- 101 662 836
- CN-A- 102 291 822
- CN-A- 102 291 836
- CN-A- 102 438 280
- CN-A- 103 167 624
- US-A1- 2015 282 214
- CHINA MOBILE ET AL: "Backoff for UEs of different priorities", 3GPP DRAFT; R2-080750, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080205, 5 February 2008 (2008-02-05), XP050138577, [retrieved on 2008-02-05]

## Description

### TECHNICAL FIELD

The embodiments of the disclosure relate to the field of communications, and in particular to a method for random access, a terminal device and a network device.

### BACKGROUND

At present, in a random access procedure for a Long Term Evolution (LTE), after the random access procedure fails, a terminal device needs to wait for a period of time and then may re-initiate the random access procedure, and this period of time is referred to as backoff time. The backoff time is a random value selected from a range between 0 to waiting time specified by a backoff indication parameter received by the terminal device. The solution for selecting the backoff time is not flexible enough in a related art.

US 2015/282214 A1 discloses that a user equipment may perform backoff for a prioritzed access based on a received backoff parameter and a received scaling factor.

WO 2016/186542 A1 discloses that a user equipment may apply a random access process where the probability distribution is controlled not only by a received backoff indicator, but also by e.g. a priority of the service for which random access is made.

The document 3GPP R2-080750 "Backoff for UEs of different priorities", by China Mobile and ZTE, 3GPP TSG-RAN WG2#61, 11th-15th February 2008, discloses that user equipment of different priorities may adopt different upper limits of backoff period.

### SUMMARY

The present invention is defined in the appended independent claims. Advantageous features are set out in the appended dependent claims.

In accordance with a first aspect, the invention provides a method for random access, comprising: under a condition that a first terminal device fails in a random access procedure, determining, by the first terminal device, according to a condition for initiating the random access procedure, at least one parameter corresponding to the condition for initiating the random access procedure, wherein the at least one parameter comprises a first threshold corresponding to the condition for initiating the random access procedure, and the first threshold is used to indicate first maximum waiting time before the first terminal device re-initiates the random access procedure triggered by the condition; receiving, by the first terminal device, a backoff indication parameter from a network device, wherein maximum waiting time before at least one terminal device re-initiates a random access procedure is indicated by the backoff indication parameter, and the at least one terminal device comprises the first terminal device; responsive to that the maximum waiting time indicated by the backoff indication parameter is greater than or equal to a duration corresponding to the first threshold, randomly determining, by the first terminal device, backoff time within the duration corresponding to the first threshold; responsive to that the maximum waiting time indicated by the backoff indication parameter is less than the duration corresponding to the first threshold, randomly determining, by the first terminal device, backoff time within the maximum waiting time indicated by the backoff indication parameter; and re-initiating, by the first terminal device, the random access procedure according to the backoff time.

In accordance with a second aspect, the invention provides a terminal device for random access, the terminal device being a first terminal device and comprising: a determination module comprising a first determination module, configured to: under a condition that the first terminal device fails in a random access procedure, determine, according to a condition for initiating the random access procedure, at least one parameter corresponding to the condition for initiating the random access procedure, wherein the at least one parameter comprises a first threshold corresponding to the condition for initiating the random access procedure, and the first threshold is used to indicate first maximum waiting time before the first terminal device re-initiates the random access procedure triggered by the condition; a receiving module, configured to receive a backoff indication parameter from a network device, wherein maximum waiting time before at least one terminal device re-initiates a random access procedure is indicated by the backoff indication parameter, and the at least one terminal device comprises the first terminal device; the determination module comprising a second determination module, configured to: randomly determine, responsive to that the maximum waiting time indicated by the backoff indication parameter is greater than or equal to a duration corresponding to the first threshold, backoff time within the duration corresponding to the first threshold; randomly determine, responsive to that the maximum waiting time indicated by the backoff indication parameter is less than the duration corresponding to the first threshold, backoff time within the maximum waiting time indicated by the backoff indication parameter; and a communication module, configured to re-initiate the random access procedure according to the backoff time.

These aspects and other aspects of the disclosure will become more concise and understandable in the following description of the embodiments.

### BRIEF DESCRIPTION OF DRAWINGS

FIG. 1 is a diagram of an application scenario according to an embodiment of the disclosure.
FIG. 2 is a flowchart of a random access procedure.
FIG. 3 is a block diagram of a method for random access according to an embodiment of the disclosure.
FIG. 4 is another block diagram of a method for random access according to an embodiment of the disclosure.
FIG. 5 is a block diagram of a terminal device for random access according to an embodiment of the disclosure.
FIG. 6 is a block diagram of a network device for random access according to an embodiment of the disclosure.
FIG. 7 is another block diagram of a terminal device for random access according to an embodiment of the disclosure.
FIG. 8 is another block diagram of a network device for random access according to an embodiment of the disclosure.

### DETAILED DESCRIPTION

The technical solutions in the embodiments of the disclosure will be described clearly and completely below in combination with the accompanying drawings in the embodiments of the disclosure.

The technical solutions in the embodiments of the disclosure may be applied in various communications systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Universal Mobile Telecommunication System (UMTS) system, a Worldwide Interoperability for Microwave Access (WiMAX) communication system or a future 5G communication system.

Particularly, the technical solutions in the embodiments of the disclosure may be applied in various communication systems based on a Non-Orthogonal Multiple Access (NOMA) technology, such as a Sparse Code Multiple Access (SCMA) system and a Low Density Signature (LDS) system. Certainly, the SCMA system and the LDS system may also be referred to other name in the communication field. Further, the technical solutions in the embodiments of the disclosure may be applied to a multi-carrier transmission system using the NOMA technology, such as Orthogonal Frequency Division Multiplexing (OFDM), Filter Bank Multi-Carrier (FBMC), Generalized Frequency Division Multiplexing (GFDM) and Filtered-OFDM (F-OFDM) systems using the NOMA technology.

The terminal device in the embodiments of the disclosure may be referred to User Equipment (UE), an access terminal, a user unit, a user station, a mobile station, a mobile platform, a remote station, a remote terminal, a mobile device, a user terminal, a terminal, a wireless communication device, a user proxy or user apparatus. The access terminal may be a cellular phone, a cordless telephone, a Session Initiation Protocol (SIP) phone, a Wireless Local Loop (WLL) station, a Personal Digital Assistant (PDA), a handheld device having a wireless communication function, a computing device or other processing devices connected to a wireless modem, vehicle-amounted devices, wearable devices, a terminal device in a future 5G network or a terminal device in a future evolved Public Land Mobile Network (PLMN) network, which is not limited in the embodiments of the disclosure.

The network device in the embodiments of the disclosure may be a device used for communicating with the terminal device. The network device may be, for example, a Base Transceiver Station (BTS) in a GSM or CDMA, a NodeB (NB) in a WCDMA system, an Evolutional NodeB (eNB or eNodeB) in an LTE system, a wireless controller in a Cloud Radio Access Network (CRAN) scenario. The network device may be a relay station, an access point, a vehicle-amounted device, a wearable device, a network device in a future 5G network or a network device in the future evolved PLMN network, which is not limited in the embodiments of the disclosure.

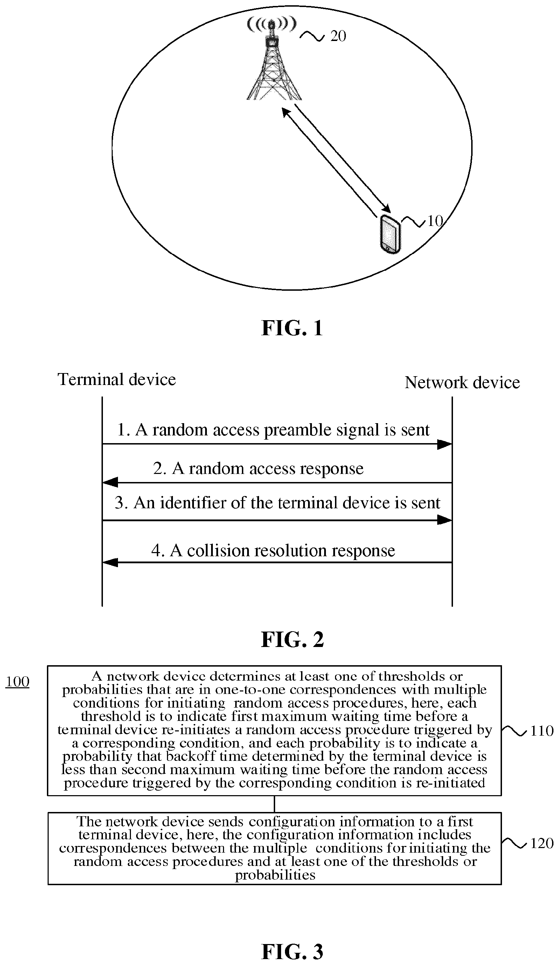

FIG. 1 is a diagram of an application scenario according to an embodiment of the disclosure. The communication system in FIG. 1 may include a terminal device 10 and a network device 20. The network device 20 is configured to provide a communication service for the terminal device 10 and accesses a core network. The terminal device 10 may access a network by searching a synchronization signal, a broadcast signal and the like sent by the network device 20 so as to communicate with the network. The arrows illustrated in FIG. 1 may indicate uplink or downlink transmission of a cellular link between the terminal device 10 and the network device 20.

A random access technology is a primary content for communication between a user and a network in a mobile communication system. In a wireless cellular network, a user initiates a connection request to a network side via a random access procedure. However, in an LTE system, the random access procedure is mainly intended to establish an uplink synchronization and receive a Cell Radio Network Temporary Identifier (C-RNTI). Thus, the random access is applied not only to initial access, but also to a condition in which uplink synchronization of the user is lost. For the ease of understanding, a random access procedure will be simply described below in combination with FIG. 2. As illustrated in FIG. 2, the procedure mainly includes the following several contents.
1. A random access preamble signal is sent. It is mainly intended that a network device may correctly evaluate a transmission time delay of a terminal device, and thus the conflict problem due to the fact that multiple terminal devices simultaneously initiate an access request is solved.
2. Feedback information sent by the network device to the terminal includes a transmission time delay required for uplink synchronization, and an access overload condition of a current system (which are used by the terminal device to perform conflict avoidance based on a backoff mechanism). In addition, the network device feeds back to the terminal an uplink resource position allocated for accessing the terminal device.
3. The terminal device sends a C-RNTI of the terminal device itself on a specified uplink resource.
4. The network device feeds conflict resolution information back to the terminal device. So far, the random access procedure completely solves the conflict problem due to the fact that the multiple terminal devices simultaneously request accessing the system.

Because of the finiteness of access resources, when multiple terminal devices simultaneously initiate access on the same access resource, a collision will occur. Each of the terminal devices may determine, according to whether feedback information in the above content 2 is received within a random access response time window or according to whether a preamble signal in the received feedback information is consistent with the preamble signal sent by the terminal device itself, whether the random access procedure fails. Specifically, when a terminal device does not receive the feedback information within the random access response time window, or a preamble signal in the received feedback information is not consistent with the preamble signal sent by the terminal device itself, the terminal device determines that the random access procedure fails. In addition, the terminal may also determine, according to the conflict resolution information in the above content 4, that the contention resolution fails and likewise may determine that the random access procedure fails.

For different random access preamble signals, the random access response information from the network device includes: a sequence number of a preamble sequence that has been successfully detected and on which no collision occurs, a transmission time delay of the sequence, an uplink transmission resource used by the terminal in the above content 3 and a temporary identifier of the user. In addition, the network device further determines, according to a current load condition of random access, whether a backoff indication parameter for conflict avoidance is added to the random access response. With this backoff indication parameter, each of the terminal devices does not send the preamble signal in a next available random access opportunity immediately in case of a random access collision, but sends the preamble signal again after a time delay, thus reducing the probability of the collision among the terminal devices.

In a future wireless communication system such as 5G, the condition for initiating the random access procedure may include the following cases.
1. An initial Radio Resource Control (RRC) connection establishment. When a terminal device is from an idle state to a connected state, the terminal device initiates the random access procedure.
2. RRC connection reestablishment. After a wireless link fails and when the terminal device needs to reestablish the RRC connection, a UE initiates the random access procedure.
3. When the terminal device performs a handover, the terminal device initiates the random access procedure in a target cell.
4. The downlink data arrives, when the terminal device is in the connected state, the network device has the downlink data to be transmitted to the terminal device and discovers that the terminal device is in an uplink out-of-synchronization state (the network device maintains an uplink timer; and if the uplink timer expires and the network device does not receive a sounding signal from the terminal device, the network device determines that the terminal device is in the uplink out-of-synchronization state), the network device controls the terminal device to initiate the random access procedure.
5. The uplink data arrives, when the terminal device is in the connected state, the terminal device has the uplink data to be transmitted to the network device and discovers that the terminal device itself is in the uplink out-of-synchronization state (the network device maintains an uplink timer; and if the uplink timer expires and the terminal device does not receive a command of adjusting a Time Advance (TA) from the network device, the terminal device determines that the terminal device is in the uplink out-of-synchronization state), the terminal device initiates the random access procedure.
6. When the terminal device is in the connected state, in order to position and in the condition that the TA is needed, the terminal device initiates the random access procedure.

Since the priorities of the conditions for initiating the random access procedures are different, the backoff time for re-initiating the random access procedures is also different. For example, in the above six cases, the priority of the RRC connection is the highest and thus the backoff time before the random access procedure is re-initiated is shortest. Therefore, how to select corresponding backoff time according to different conditions for initiating the random access procedures is given in the embodiments of the disclosure.

FIG. 3 is a block diagram of a method 100 for random access according to an embodiment of the disclosure. As illustrated in FIG. 3, the method 100 is described from the perspective of a network device and is specifically executed by a base station. The method 100 mainly includes the following operations.

At S110, a network device determines at least one of thresholds or probabilities that are in one-to-one correspondences with multiple conditions for initiating random access procedures, here, each threshold is to indicate first maximum waiting time before a terminal device re-initiates a random access procedure triggered by a corresponding condition, and each probability is to indicate a probability that backoff time determined by the terminal device is less than second maximum waiting time before the random access procedure triggered by the corresponding condition is re-initiated.

At S120, the network device sends configuration information to a first terminal device, here, the configuration information includes correspondences between the multiple conditions for initiating the random access procedures and at least one of the thresholds or probabilities.

As can be seen from the above, since the backoff time actually required for random access procedures triggered by the different conditions is different, in the related art, maximum waiting time configured by the network device is used for random access procedures triggered by different conditions at a same moment, which is not suitable. Therefore, for random access procedures triggered by the different conditions, at least one of different thresholds or different probabilities are provided, so that the terminal device determines maximum waiting time based on a random access procedure, which is triggered by a condition and initiated by the terminal device, and thus has a better opportunity to select suitable backoff time to improve the communication flexibility and performance.

Optionally, the network device may record multiple times of backoff time before different random access procedures are re-initiated by the terminal device, classify based on different conditions and perform a calculation to obtain corresponding thresholds, such as evaluating an average value. The network device may further determine thresholds in combination with priorities of the conditions for initiating the random access procedures, such as priorities of random access scenarios, Quality of Service (QoS) parameters of data to be transmitted or the number of times that the initiated random access procedure fails. Specifically, the network device may determine corresponding thresholds according to backoff time for different random access procedures under a general condition and priorities of conditions for initiating the different random access procedures. For example, since the priority of the RRC connection is higher than the priority of a cell handover performed by the terminal device, the threshold for an RRC connection scenario may be set as 10ms, and the threshold for a handover scenario may be set as 20ms. Also for example, it is general that when the terminal device is in the connected state, a tolerable maximum time delay of to-be-transmitted data carried in a QoS parameter is 30ms, thus the threshold for an uplink out-of-synchronization scenario in which the random access procedure is initiated by the terminal device may be set as at least 30ms or below. Also for example, the terminal device initiates five times of RRC connections and the five times of RRC connections all fail; and before the terminal device initiates a sixth time of random access procedure, the network device may re-configure for the terminal device a threshold which corresponds to a small duration.

Optionally, the network device may record multiple times of backoff time before different random access procedures are re-initiated by the terminal device, classify based on different conditions and perform a calculation to obtain corresponding probabilities, such as evaluating a probability that the backoff time falls in a time interval. For example, when the network device finds via the record that nine of ten times of the backoff time in a RRC connection establishment scenario is within an interval [10ms, 20ms] and one of ten times of backoff time is greater than 20ms, the probability that is configured by the network device for the RRC connection establishment scenario and that the backoff time is within 20ms may be 90%. The 20ms may be broadcasted to the terminal device by the network device in advance. The network device may further determine different probabilities in combination with priorities of the conditions for initiating the random access procedures, such as priorities for random access scenarios, Quality of Service (QoS) parameters of to-be-transmitted data or the number of times that the initiated random access procedure fails. For example, if the priority of the condition is combined when the probability is configured, likewise for the priority of the RRC connection establishment scenario is higher than the priority of the handover of the terminal device scenario, it may be appropriate to improve the probability for the RRC connection establishment scenario to 90% or more, such as 95%.

The above merely describes the examples of specific implementation on how the network device configures at least one of thresholds or probabilities corresponding to conditions for initiating the random access procedures, which are not limited by the embodiments of the disclosure.

In the embodiments of the disclosure, the description is made to the conditions for initiating the random access procedures involved in the existing communication system, and the condition may further be other conditions for initiating the random access procedures in a future communication system.

The network device should notify, after configuring correspondences between the conditions for initiating the random access procedures and at least one of the thresholds or probabilities, the correspondences to the terminal device via for example, a broadcast. The correspondences may be timely updated at a cycle in combination with an actual scenario.

It may also be seen from the above that when the network device sends the feedback information to the terminal device, maximum waiting time (i.e., the backoff indication parameter in the embodiment of the disclosure) before the terminal device re-initiates the random access procedure when the random access procedure fails, may be carried in the feedback information. It should be understood that the difference between the backoff indication parameter and the thresholds in the embodiment of the disclosure is in that the thresholds are configured for the different conditions for initiating random access procedures, and the backoff indication parameter is configured for all terminal device performing random access procedures simultaneously and having a resource competition. In addition, the backoff indication parameter is configured mainly based on a load condition of the network device, and the thresholds are generally related to the priorities of the different conditions for initiating the random access procedures. The network device may also directly merge the backoff indication parameter and the thresholds into a single based on the load condition of the network device and the priorities of the different conditions, i.e., the maximum waiting time, which is carried in the feedback information by the network device, is multiple maximum waiting time corresponding to the multiple conditions as a matter of fact. Upon the reception of the corresponding relationships, the terminal device may select a corresponding maximum waiting time based on a trigger condition for the terminal device, and thus may further randomly select the final backoff time.

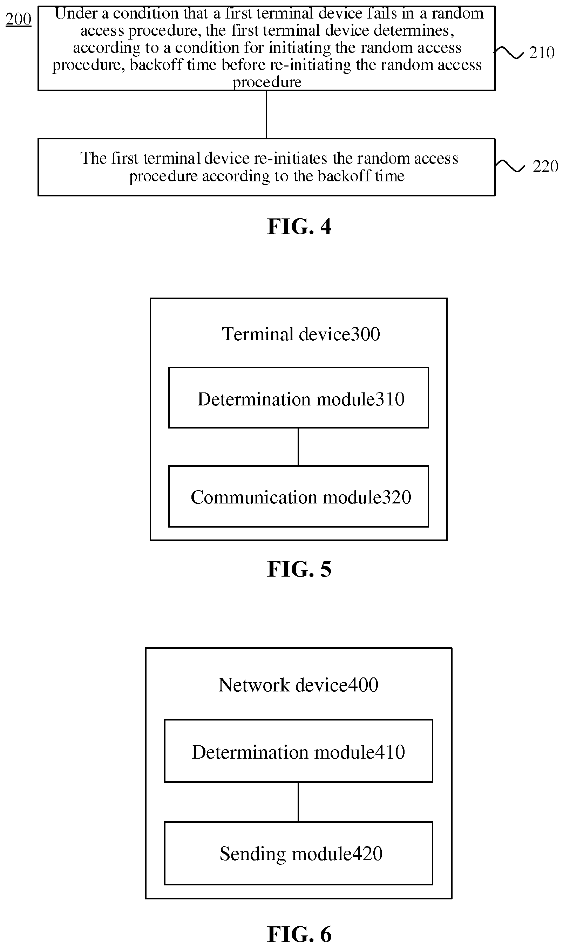

FIG. 4 is a block diagram of a method 200 for random access according to an embodiment of the disclosure. As illustrated in FIG. 4, the method 200 is described from the perspective of a terminal device and is specifically executed by a UE. The method 200 mainly includes the following operations.

At S210, under a condition that a first terminal device fails in a random access procedure, the first terminal device determines, according to a condition for initiating the random access procedure, backoff time before re-initiating the random access procedure.

At S220, the first terminal device re-initiates the random access procedure according to the backoff time.

Specifically, upon the determination of failure of random access procedure, the first terminal device may determine, according to a condition for triggering the random access procedure at present, backoff time before the random access procedure is re-initiated. For example, if the first terminal device does not receive feedback information within a random access response time window or no preamble signal in the received feedback information is consistent with the preamble signal sent by the first terminal device, the random access procedure fails. Thus the first terminal device determines, according to the condition for initiating the random access procedure, backoff time before the random access procedure is re-initiated. For example, if the condition is an RRC connection, the first terminal device may determine, according to maximum waiting time for the random access procedure triggered by the same condition at a previous time, backoff time before the random access procedure is re-initiated. The terminal device may determine, based on the condition for initiating the random access procedure performed by the terminal device itself, the backoff time before the random access procedure is re-initiated, and can have a better opportunity to select suitable backoff time to improve the communication flexibility and performance.

Optionally, in the embodiment of the disclosure, the operation S210 may include the following operations.

At S211, the first terminal device determines, according to the condition for initiating the random access procedure, at least one of a first threshold corresponding to the condition for initiating the random access procedure or a first probability corresponding to the condition for initiating the random access procedure, here, the first threshold is to indicate first maximum waiting time before the first terminal re-initiates the random access procedure triggered by the condition, and the first probability is to indicate a probability that the backoff time is less than second maximum waiting time before the random access procedure triggered by the condition is re-initiated.

At S212, the first terminal device determines the backoff time according to at least one of the first threshold or the first probability.

For example, if the first terminal device knows in advance correspondences between conditions for initiating random access procedures and at least one of thresholds or probabilities, as illustrated in table 1, the first terminal device may further acquire the first threshold or the first probability corresponding to the random access procedure based on the condition for initiating the random access procedure by the first terminal device.

**Table 1**

| Condition | Threshold | Probability |
|---|---|---|
| Initial RRC connection establishment | 10ms | 90% (if the second maximum waiting time is 12ms) |
| RRC connection reestablishment | 20ms | 80% (if the second maximum waiting time is 25ms) |
| A cell handover of terminal device | 30ms | 70% (if the second maximum waiting time is 40ms) |
| Downlink, terminal device is out-of-synchronization | 40ms | 80% (if the second maximum waiting time is 50ms) |
| Uplink, terminal device is out-of-synchronization | 50ms | 50% (if the second maximum waiting time is 100ms) |
| Positioning | 60ms | 80% (if the second maximum waiting time is 75ms) |

Specifically, when the first terminal device is performing an initial RRC connection establishment, the first terminal device may search for the above table and acquires that the corresponding threshold is 10ms, i.e., the first terminal device may randomly generate final backoff time within 0 to 10ms; and when the first terminal device is performing the RRC connection reestablishment, the first terminal device may search for the above table and acquires that the corresponding threshold is 20ms, i.e., the first terminal device may randomly generate final backoff time within 0 to 20ms. When the first terminal device is performing a cell handover of the terminal device, the first terminal device searches for the table and acquires that the corresponding probability is 70%. Herein, the 70% is a probability when the second maximum waiting time is 40 ms, and the first terminal device may randomly generate the final backoff time based on the probability.

Optionally, the first terminal device may further receive the backoff indication parameter configured by the network device. The backoff indication parameter is configured by the network device based on a current load condition. If the maximum waiting time indicated by the backoff indication parameter is 20ms, the first terminal device may randomly generate a first duration within 0-20ms, such as 15ms. In such case, if the first terminal device performs the initial RRC connection, the first terminal device searches for the table and may acquire that the threshold is 10ms, which is less than 15ms. Further, the first terminal device may randomly regenerate the final backoff time within 0-10ms. In addition, if the first duration generated by the first terminal device is less than the threshold configured, the first terminal device may directly take the generated first duration as the final backoff time. The first terminal device may also first determine the magnitude relationship between the maximum waiting time indicated by the backoff indication parameter and the threshold. If the maximum waiting time indicated by the backoff indication parameter is less than the threshold, the first terminal device may randomly generate the final backoff time within 0 to the maximum waiting time indicated by the backoff indication parameter; and if the maximum waiting time indicated by the backoff indication parameter is greater than the threshold, the first terminal device randomly generates the final backoff time within 0 to the threshold.

Optionally, the backoff indication parameter received by the first terminal device may further carry information on several equal parts, which are divided by the network device, of the maximum waiting time indicated by the backoff indication parameter, and correspondingly, each probability is a probability that the first terminal device selects the backoff time in an equal part. For example, if the maximum waiting time indicated by the backoff indication parameter is 60ms and is divided into six equal parts (i.e., each equal part is 10ms), the 90% for the initial RRC connection in the table 1 may be the probability that the backoff time is selected within a first equal part (i.e., within 0-10ms) is 90%. In other words, the probability that the backoff time is selected from 11ms to 60ms is 10%.

Optionally, in the embodiment of the disclosure, the first terminal device determines the backoff time according to the backoff indication parameter, the first threshold and the first probability may include the following operations.

The first terminal device randomly determines a second duration according to the backoff indication parameter and the first probability; and responsive to the second duration is greater than the second maximum waiting time and a duration corresponding to the first threshold, the first terminal device randomly determines the backoff time within the duration corresponding to the first threshold.

Specifically, the first terminal device may further determine the final backoff time based on the threshold, the probability and the backoff indication parameter. Also for example, in the above table 1, if the first terminal device performs the initial RRC connection, and the received backoff is 60ms and is divided into six equal parts, the 90% is the probability that the first terminal device selects the backoff time in the first equal part. However, the first terminal device accidentally selects the backoff time within 10-60 at 10% probability. In such case, the first terminal device does not need to reselect the backoff time at 90% probability but reselect based on the threshold 10ms, i.e., randomly generates the final backoff time directly within 0-10ms.

The above various conditions and values in the table 1 are merely for example and are not intended to limit the embodiments of the disclosure.

The interaction between the terminal device and the network device, relevant characteristics, functions and the like described by the terminal device correspond to relevant characteristics and functions of the network device. In other words, what information is sent by the network device to the terminal device and will be received by the terminal device correspondingly.

In various embodiments of the disclosure, the numeral of each process does not mean the precedence of the execution sequence. The execution sequence of each process should be determined by its function and internal logic and does not intended to form any limit to the implementation process in the embodiments of the disclosure.

The methods for the random access according to the embodiments of the disclosure are described above in detail. Hereinafter, devices for the random access according to embodiments of the disclosure will be described below in combination with FIG. 5 to FIG. 8. The technical features in the method embodiments are applied to the following device embodiments.

FIG. 5 is a block diagram of a terminal device 300 for random access according to an embodiment of the disclosure. As illustrated in FIG. 5, the terminal device is a first terminal device. The terminal device 300 may include: a determination module 310 and a communication module 320.

The determination module 310 is configured to determine, under a condition that a first terminal device fails in a random access procedure, according to a condition for initiating the random access procedure, backoff time before re-initiating the random access procedure.

The communication module 320 is configured to re-initiate the random access procedure according to the backoff time.

Therefore, the terminal device for the random access according to the embodiment of the disclosure can improve the system communication flexibility and system performance.

Optionally, in the embodiment of the disclosure, the determination module 310 may include a first determination unit and a second determination unit.

The first determination unit is configured to determine, according to the condition for initiating the random access procedure, at least one of a first threshold corresponding to the condition for initiating the random access procedure or a first probability corresponding to the condition for initiating the random access procedure, here, the first threshold is to indicate first maximum waiting time before the first terminal re-initiates the random access procedure triggered by the condition, and the first probability is to indicate a probability that the backoff time is less than second maximum waiting time before the random access procedure triggered by the condition is re-initiated.

The second determination unit is configured to determine the backoff time according to at least one of the first threshold or the first probability.

Optionally, in the embodiment of the disclosure, the terminal device further includes: a receiving module, configured to receive a backoff indication parameter sent by a network device, here, the backoff indication parameter is to indicate maximum waiting time before at least one terminal device re-initiates a random access procedure, and the at least one terminal device includes the first terminal device. The second determination unit is configured to: determine the backoff time according to the backoff indication parameter and at least one of the first threshold or the first probability.

Optionally, in the embodiment of the disclosure, the second determination unit is configured to: randomly determine a first duration within maximum waiting time indicated by the backoff indication parameter; and randomly determine, responsive to the first duration is greater than a duration corresponding to the first threshold, the backoff time within the duration corresponding to the first threshold.

Optionally, in the embodiment of the disclosure, the second determination unit is configured to: randomly determine, responsive to maximum waiting time indicated by the backoff indication parameter is greater than a duration corresponding to the first threshold, the backoff time within the duration corresponding to the first threshold; and randomly determine, responsive to the maximum waiting time indicated by the backoff indication parameter is less than the duration corresponding to the first threshold, the backoff time within the maximum waiting time indicated by the backoff indication parameter.

Optionally, in the embodiment of the disclosure, the second maximum waiting time is less than maximum waiting time indicated by the backoff indication parameter.

Optionally, in the embodiment of the disclosure, the second determination unit is configured to: randomly determine a second duration according to the backoff indication parameter and the first probability; and randomly determine, responsive to the second duration is greater than the second maximum waiting time and greater than a duration corresponding to the first threshold, the backoff time within the duration corresponding to the first threshold.

Optionally, in the embodiment of the disclosure, the receiving module is further configured to: receive configuration information sent by the network device, here, the configuration information includes one-to-one correspondences between multiple conditions for initiating random access procedures and multiple thresholds, and the multiple conditions for initiating the random access procedures include the condition for initiating the random access procedure.

The terminal device 300 for the random access according to the embodiment of the disclosure may correspond to the first terminal device in the method embodiment of the disclosure; and the above and other operations and/or functions of each unit in the terminal device 300 are respectively intended to implement corresponding procedures of the first terminal device in the method 200 illustrated in FIG. 4, and will not be repeated for the briefness.

FIG. 6 is a block diagram of a network device 400 for random access according to an embodiment of the disclosure. As illustrated in FIG. 6, the network device 400 may include: a determination module 410 and a sending module 420.

The determination module 410 is configured to determine at least one of thresholds or probabilities that are in one-to-one correspondences with multiple conditions for initiating random access procedures, here, each threshold is to indicate first maximum waiting time before a terminal device re-initiates a random access procedure triggered by a corresponding condition, and each probability is to indicate a probability that backoff time determined by the terminal device is less than second maximum waiting time before the random access procedure triggered by the corresponding condition is re-initiated.

The sending module 420 is configured to send configuration information to a first terminal device, here, the configuration information includes correspondences between the multiple conditions for initiating the random access procedures and at least one of the thresholds or probabilities.

Therefore, the network device for the random access according to the embodiment of the disclosure can improve the system communication flexibility and system performance.

Optionally, in the embodiment of the disclosure, the determination module 410 is configured to: determine, according to priorities of the multiple conditions for initiating the random access procedures, at least one of the thresholds or probabilities that are in the one-to-one correspondences with the multiple conditions for initiating the random access procedures.

Optionally, in the embodiment of the disclosure, the sending module 420 is further configured to: send a backoff indication parameter to the first terminal device, here, the backoff indication parameter is to indicate maximum waiting time before at least one terminal device re-initiates a random access procedure, and the at least one terminal device includes the first terminal device.

The network device 400 for the random access according to the embodiment of the disclosure may correspond to the network device in the method embodiment of the disclosure; and the above and other operations and/or functions of each unit in the network device 400 are respectively intended to implement corresponding procedures of the network device in the method 100 illustrated in FIG. 3, and will not be repeated for the briefness.

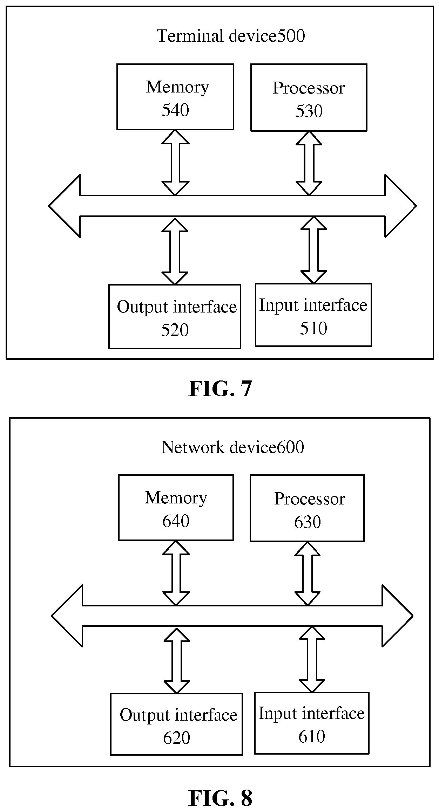

As illustrated in FIG. 7, an embodiment of the disclosure further provides a terminal device 500 for random access. The terminal device 500 may be the terminal device 300 in FIG. 3, and can be configured to execute the contents, corresponding to the method 200 in FIG. 4, of the first terminal device. The terminal device 500 may include: an input interface 510, an output interface 520, a processor 530 and a memory 540. The input interface 510, the output interface 520, the processor 530 and the memory 540 may be connected via a bus system. The memory 540 is configured to store a program, an instruction or a code. The processor 530 is configured to execute the program, the instruction or the code in the memory 540 to control the input interface 510 to receive a signal and control the output interface 520 to send the signal and accomplish the operations in the method embodiment.

Therefore, the terminal device for the random access according to this embodiment of the disclosure can improve the system communication flexibility and system performance.

In this embodiment of the disclosure, the processor 530 may be a Central Processing Unit (CPU). The processor 530 may further be other universal processors, a Digital Signal Processor (DSP), an Application Specific Integrated Circuit (ASIC) and a Field Programmable Gate Array (FPGA) or other programmable logic devices, discrete gates or transistor logic devices, and discrete hardware component, etc. The universal processor may be a microprocessor or the processor may also be any conventional processor, etc.

The memory 540 may include a Read Only Memory (ROM) and a Random Access Memory (RAM) and provides instructions and data for the processor 530. A part of the memory 540 may further include a nonvolatile RAM. For example, the memory 540 may further store information on a type of a storage device.

During an implementation process, the contents of the methods may be accomplished by an integrated logic circuit of hardware in the processor 530 or an instruction in a software form. The contents of the methods disclosed in combination the embodiments of the disclosure may be directly executed and accomplished by means of a hardware processor or may be executed and accomplished using a combination of hardware and software modules in the processor. The software module may be located in a mature storage medium in the art, such as a RAM, a flash memory, an ROM, a Programmable ROM (PROM), an Electrically EPROM (EEPROM) or a register. The storage medium is located in the memory 540. The processor 530 reads information from the memory 540 and completes the contents of the foregoing methods in combination with the hardware of the processor. In order to avoid repetition, the above will not be described herein in detail.

In a specific implementation manner, the determination module 310 and the communication module 320 in FIG. 3 may be implemented by using the processor 530 in FIG. 7, and the receiving module may be implemented by the input interface 510 in FIG. 7.

As illustrated in FIG. 8, an embodiment of the disclosure further provides a network device 600 for random access. The network device 600 may be the network device 400 in FIG. 4, and can be configured to execute the contents, corresponding to the method 100 in FIG. 3, of the network device. The network device 600 may include: an input interface 610, an output interface 620, a processor 630 and a memory 640. The input interface 610, the output interface 620, the processor 630 and the memory 640 may be connected via a bus system. The memory 640 is configured to store a program, an instruction or a code. The processor 630 is configured to execute the program, the instruction or the code in the memory 640 to control the input interface 610 to receive a signal and control the output interface 620 to send the signal and accomplish the operations in the method embodiment.

Therefore, the network device for the random access according to this embodiment of the disclosure can improve the system communication flexibility and system performance.

In this embodiment of the disclosure, the processor 630 may be a Central Processing Unit (CPU). The processor 630 may further be other universal processors, a Digital Signal Processor (DSP), an Application Specific Integrated Circuit (ASIC) and a Field Programmable Gate Array (FPGA) or other programmable logic devices, discrete gates or transistor logic devices, and discrete hardware component, etc. The universal processor may be a microprocessor or the processor may also be any conventional processor, etc.

The memory 640 may include a Read Only Memory (ROM) and a Random Access Memory (RAM) and provides instructions and data for the processor 630. A part of the memory 640 may further include a nonvolatile RAM. For example, the memory 640 may further store information on a type of a storage device.

During an implementation process, the contents of the methods may be accomplished by an integrated logic circuit of hardware in the processor 630 or an instruction in a software form. The contents of the methods disclosed in combination the embodiments of the disclosure may be directly executed and accomplished by means of a hardware processor or may be executed and accomplished using a combination of hardware and software modules in the processor. The software module may be located in a mature storage medium in the art, such as a RAM, a flash memory, an ROM, a Programmable ROM (PROM), an Electrically EPROM (EEPROM) or a register. The storage medium is located in the memory 640. The processor 630 reads information from the memory 640 and completes the contents of the foregoing methods in combination with the hardware of the processor. In order to avoid repetition, the above will not be described herein in detail.

In a specific implementation manner, the determination module 410 in FIG. 4 may be implemented by using the processor 630 in FIG. 8, and the sending module may be implemented by the output interface 620 in FIG. 8.

A person of ordinary skill in the art may be aware that, in combination with the examples described in the embodiments disclosed in the disclosure, units and algorithm operations may be implemented by electronic hardware, computer software or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the disclosure, it should be understood that the disclosed system, apparatus, and method may be implemented in other manners. For example, the described device embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the disclosure may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the disclosure essentially, or the part contributing to the prior art, or some of the technical solutions may be implemented in a form of a software product. The software product is stored in a storage medium and includes several instructions for instructing a computer device (which may be a personal computer, a server, or a network device) to perform all or some of the steps of the methods described in the embodiments of the disclosure. The foregoing storage medium includes any medium that can store program code, such as a U disk, a removable hard disk, an ROM, an RAM, a magnetic disk, or an optical disc.

The foregoing descriptions are merely specific implementation manners of the disclosure but are not intended to limit the protection scope of the claims.

## Claims

1. A method for random access, comprising:
under a condition that a first terminal device fails in a random access procedure, determining (210), by the first terminal device, according to a condition for initiating the random access procedure, at least one parameter corresponding to the condition for initiating the random access procedure, wherein the at least one parameter comprises a first threshold corresponding to the condition for initiating the random access procedure, and the first threshold is used to indicate first maximum waiting time before the first terminal device re-initiates the random access procedure triggered by the condition;
receiving, by the first terminal device, a backoff indication parameter from a network device, wherein maximum waiting time before at least one terminal device re-initiates a random access procedure is indicated by the backoff indication parameter, and the at least one terminal device comprises the first terminal device;
responsive to that the maximum waiting time indicated by the backoff indication parameter is greater than or equal to a duration corresponding to the first threshold, randomly determining, by the first terminal device, backoff time within the duration corresponding to the first threshold;
responsive to that the maximum waiting time indicated by the backoff indication parameter is less than the duration corresponding to the first threshold, randomly determining, by the first terminal device, backoff time within the maximum waiting time indicated by the backoff indication parameter; and
re-initiating (220), by the first terminal device, the random access procedure according to the backoff time.

2. The method of claim 1, wherein the at least one parameter further comprises a first probability, wherein the first probability is to indicate a probability that the backoff time is less than second maximum waiting time before the random access procedure triggered by the condition is re-initiated

3. The method of claim 2, further comprising:
determining, by the first terminal device, the backoff time according to the backoff indication parameter, the first threshold and the first probability.

4. The method of claim 3, wherein the second maximum waiting time is less than the maximum waiting time indicated by the backoff indication parameter; and
wherein determining, by the first terminal device, the backoff time according to the backoff indication parameter, the first threshold and the first probability comprises:
randomly determining, by the first terminal device, a second duration according to the backoff indication parameter and the first probability; and
responsive to that the second duration is greater than the second maximum waiting time and a duration corresponding to the first threshold, randomly determining, by the first terminal, the backoff time within the duration corresponding to the first threshold.

5. The method of any one of claims 1 to 4, further comprising:
responsive to that a preamble sequence sent by the first terminal device to the network device is absent in a random access response, determining that the first terminal device fails in the random access procedure; or
responsive to that a contention resolution failure is declared in a collision resolution response, determining that the first terminal device fails in the random access procedure.

6. A terminal device for random access, the terminal device being a first terminal device and comprising:
a determination module (310) comprising a first determination module, configured to: under a condition that the first terminal device fails in a random access procedure, determine, according to a condition for initiating the random access procedure, at least one parameter corresponding to the condition for initiating the random access procedure, wherein the at least one parameter comprises a first threshold corresponding to the condition for initiating the random access procedure, and the first threshold is used to indicate first maximum waiting time before the first terminal device re-initiates the random access procedure triggered by the condition;
a receiving module, configured to receive a backoff indication parameter from a network device, wherein maximum waiting time before at least one terminal device re-initiates a random access procedure is indicated by the backoff indication parameter, and the at least one terminal device comprises the first terminal device;
the determination module (310) comprising a second determination module, configured to: randomly determine, responsive to that the maximum waiting time indicated by the backoff indication parameter is greater than or equal to a duration corresponding to the first threshold, backoff time within the duration corresponding to the first threshold;
randomly determine, responsive to that the maximum waiting time indicated by the backoff indication parameter is less than the duration corresponding to the first threshold, backoff time within the maximum waiting time indicated by the backoff indication parameter; and
a communication module (320), configured to re-initiate the random access procedure according to the backoff time.

7. The terminal device of claim 6, wherein the at least one parameter further comprises a first probability, wherein the first probability is to indicate a probability that the backoff time is less than second maximum waiting time before the random access procedure triggered by the condition is re-initiated

8. The terminal device of claim 7, wherein the second determination unit is configured to determine the backoff time according to the backoff indication parameter, the first threshold and the first probability.

9. The terminal device of claim 8, wherein the second maximum waiting time is less than the maximum waiting time indicated by the backoff indication parameter.

10. The terminal device of claim 9, wherein the second determination module is configured to:
randomly determine a second duration according to the backoff indication parameter and the first probability; and
randomly determine, responsive to that the second duration is greater than the second maximum waiting time and a duration corresponding to the first threshold, the backoff time within the duration corresponding to the first threshold.

11. The terminal device of any one of claims 6 to 10, wherein the receiving module is further configured to:
receive configuration information sent by the network device, wherein the configuration information comprises one-to-one correspondences between a plurality of conditions for initiating random access procedures and a plurality of thresholds, and the plurality of conditions for initiating the random access procedures comprises the condition for initiating the random access procedure.

12. The terminal device of any one of claims 6 to 11, wherein the determination module (310) is further configured to:
responsive to that a preamble sequence sent by the first terminal device to the network device is absent in a random access response, determine that the first terminal device fails in the random access procedure; or
responsive to that a contention resolution failure is declared in a collision resolution response, determine that the first terminal device fails in the random access procedure.

## Patentansprüche

1. Verfahren für Direktzugriff, umfassend:
unter einer Bedingung, dass eine erste Endgeräteeinrichtung in einer Direktzugriffsprozedur versagt, Bestimmen (210), durch die erste Endgeräteeinrichtung, gemäß einer Bedingung zum Initiieren der Direktzugriffsprozedur, mindestens eines Parameters entsprechend der Bedingung zum Initiieren der Direktzugriffsprozedur, wobei der mindestens eine Parameter einen ersten Schwellwert entsprechend der Bedingung zum Initiieren der Direktzugriffsprozedur umfasst und der erste Schwellwert verwendet wird, um eine erste maximale Wartezeit anzuzeigen, bevor die erste Endgeräteeinrichtung die durch die Bedingung ausgelöste Direktzugriffsprozedur wieder initiiert;
Empfangen, durch die erste Endgeräteeinrichtung, eines Verzichtsanzeigeparameters von einer Netzwerkeinrichtung, wobei die maximale Wartezeit, bevor mindestens eine Endgeräteeinrichtung eine Direktzugriffsprozedur wieder initiiert, durch den Verzichtsanzeigeparameter angezeigt wird und die mindestens eine Endgeräteeinrichtung die erste Endgeräteeinrichtung umfasst;
als Reaktion darauf, dass die durch den Verzichtsanzeigeparameter angezeigte maximale Wartezeit größer oder gleich einer Dauer entsprechend dem ersten Schwellwert ist, zufälliges Bestimmen, durch die erste Endgeräteeinrichtung, einer Verzichtszeit innerhalb der Dauer entsprechend dem ersten Schwellwert;
als Reaktion darauf, dass die durch den Verzichtsanzeigeparameter angezeigte maximale Wartezeit kleiner ist als die Dauer entsprechend dem ersten Schwellwert, zufälliges Bestimmen, durch die erste Endgeräteeinrichtung, einer Verzichtszeit innerhalb der durch den Verzichtsanzeigeparameter angezeigten maximalen Wartezeit; und
Wiederinitiieren (220), durch die erste Endgeräteeinrichtung, der Direktzugriffsprozedur gemäß der Verzichtszeit.

2. Verfahren nach Anspruch 1, wobei der mindestens eine Parameter weiterhin eine erste Wahrscheinlichkeit umfasst, wobei die erste Wahrscheinlichkeit eine Wahrscheinlichkeit anzeigen soll, dass die Verzichtszeit kleiner ist als die zweite maximale Wartezeit, bevor die durch die Bedingung ausgelöste Direktzugriffsprozedur wieder initiiert wird.

3. Verfahren nach Anspruch 2, weiter umfassend:
Bestimmen, durch die erste Endgeräteeinrichtung, der Verzichtszeit gemäß dem Verzichtsanzeigeparameter, dem ersten Schwellwert und der ersten Wahrscheinlichkeit.

4. Verfahren nach Anspruch 3, wobei die zweite maximale Wartezeit kleiner ist als die durch den Verzichtsanzeigeparameter angezeigte maximale Wartezeit; und
wobei das Bestimmen, durch die erste Endgeräteeinrichtung, der Verzichtszeit gemäß dem Verzichtsanzeigeparameter, dem ersten Schwellwert und der ersten Wahrscheinlichkeit umfasst:
zufälliges Bestimmen, durch die erste Endgeräteeinrichtung, einer zweiten Dauer gemäß dem Verzichtsanzeigeparameter und der ersten Wahrscheinlichkeit; und
als Reaktion darauf, dass die zweite Dauer größer ist als die zweite maximale Wartezeit und eine Dauer entsprechend dem ersten Schwellwert, zufälliges Bestimmen, durch das erste Endgerät, der Verzichtszeit innerhalb der Dauer entsprechend dem ersten Schwellwert.

5. Verfahren nach einem der Ansprüche 1 bis 4, weiter umfassend:
als Reaktion darauf, dass eine durch die erste Endgeräteeinrichtung zu der Netzwerkeinrichtung gesendete Präambelsequenz in einer Direktzugriffsantwort fehlt, Bestimmen, dass die erste Endgeräteeinrichtung in der Direktzugriffsprozedur versagt; oder
als Reaktion darauf, dass ein Konfliktlösungsversagen in einer Kollisionslösungsantwort erklärt wird, Bestimmen, dass die erste Endgeräteeinrichtung in der Direktzugriffsprozedur versagt.

6. Endgeräteeinrichtung für Direktzugriff, wobei die Endgeräteeinrichtung eine erste Endgeräteeinrichtung ist, und umfassend:
ein Bestimmungsmodul (310) umfassend ein erstes Bestimmungsmodul, konfiguriert zum: unter einer Bedingung, dass die erste Endgeräteeinrichtung in einer Direktzugriffsprozedur versagt, Bestimmen, gemäß einer Bedingung zum Initiieren der Direktzugriffsprozedur, mindestens eines Parameters entsprechend der Bedingung zum Initiieren der Direktzugriffsprozedur, wobei der mindestens eine Parameter einen ersten Schwellwert entsprechend der Bedingung zum Initiieren der Direktzugriffsprozedur umfasst und der erste Schwellwert verwendet wird, um eine erste maximale Wartezeit anzuzeigen, bevor die erste Endgeräteeinrichtung die durch die Bedingung ausgelöste Direktzugriffsprozedur wieder initiiert;
ein Empfangsmodul, konfiguriert zum Empfangen eines Verzichtsanzeigeparameters von einer Netzwerkeinrichtung, wobei die maximale Wartezeit, bevor mindestens eine Endgeräteeinrichtung eine Direktzugriffsprozedur wieder initiiert, durch den Verzichtsanzeigeparameter angezeigt wird und die mindestens eine Endgeräteeinrichtung die erste Endgeräteeinrichtung umfasst;
wobei das Bestimmungsmodul (310) ein zweites Bestimmungsmodul umfasst, konfiguriert zum zufälligen Bestimmen, als Reaktion darauf, dass die durch den Verzichtsanzeigeparameter angezeigte maximale Wartezeit größer oder gleich einer Dauer entsprechend dem ersten Schwellwert ist, einer Verzichtszeit innerhalb der Dauer entsprechend dem ersten Schwellwert;
zufälliges Bestimmen, als Reaktion darauf, dass die durch den Verzichtsanzeigeparameter angezeigte maximale Wartezeit kleiner ist als die Dauer entsprechend dem ersten Schwellwert, einer Verzichtszeit innerhalb der durch den Verzichtsanzeigeparameter angezeigten maximalen Wartezeit; und
ein Kommunikationsmodul (320), konfiguriert zum Wiederinitiieren der Direktzugriffsprozedur gemäß der Verzichtszeit.

7. Endgeräteeinrichtung nach Anspruch 6, wobei der mindestens eine Parameter weiterhin eine erste Wahrscheinlichkeit umfasst, wobei die erste Wahrscheinlichkeit eine Wahrscheinlichkeit anzeigen soll, dass die Verzichtszeit kleiner ist als die zweite maximale Wartezeit, bevor die durch die Bedingung ausgelöste Direktzugriffsprozedur wieder initiiert wird.

8. Endgeräteeinrichtung nach Anspruch 7, wobei die zweite Bestimmungseinheit konfiguriert ist zum Bestimmen der Verzichtszeit gemäß dem Verzichtsanzeigeparameter, dem ersten Schwellwert und der ersten Wahrscheinlichkeit.

9. Endgeräteeinrichtung nach Anspruch 8, wobei die zweite maximale Wartezeit kleiner ist als die durch den Verzichtsanzeigeparameter angezeigte maximale Wartezeit.

10. Endgeräteeinrichtung nach Anspruch 9, wobei das zweite Bestimmungsmodul konfiguriert ist zum:
zufälligen Bestimmen einer zweiten Dauer gemäß dem Verzichtsanzeigeparameter und der ersten Wahrscheinlichkeit; und
zufälligen Bestimmen, als Reaktion darauf, dass die zweite Dauer größer ist als die zweite maximale Wartezeit und eine dem ersten Schwellwert entsprechende Dauer, der Verzichtszeit innerhalb der Dauer entsprechend dem ersten Schwellwert.

11. Endgeräteeinrichtung nach einem der Ansprüche 6 bis 10, wobei das Empfangsmodul weiter konfiguriert ist zum:
Empfangen von durch die Netzwerkeinrichtung gesendeten Konfigurationsinformationen, wobei die Konfigurationsinformationen Eins-zu-Eins-Übereinstimmungen zwischen mehreren Bedingungen für das Initiieren von Direktzugriffsprozeduren und mehreren Schwellwerten umfasst und die mehreren Bedingungen zum Initiieren der Direktzugriffsprozeduren die Bedingung zum Initiieren der Direktzugriffsprozedur umfassen.

12. Endgeräteeinrichtung nach einem der Ansprüche 6 bis 11, wobei das Bestimmungsmodul (310) weiter konfiguriert ist zum:
als Reaktion darauf, dass eine durch die erste Endgeräteeinrichtung zu der Netzwerkeinrichtung gesendete Präambelsequenz in einer Direktzugriffsantwort fehlt, Bestimmen, dass die erste Endgeräteeinrichtung in der Direktzugriffsprozedur versagt; oder
als Reaktion darauf, dass ein Konfliktlösungsversagen in einer Kollisionslösungsantwort erklärt wird, Bestimmen, dass die erste Endgeräteeinrichtung in der Direktzugriffsprozedur versagt.

## Revendications

1. Procédé d'accès aléatoire, comprenant :
sous une condition qu'un premier dispositif terminal échoue dans une procédure d'accès aléatoire, la détermination (210), par le premier dispositif terminal, en fonction d'une condition d'initiation de la procédure d'accès aléatoire, d'au moins un paramètre correspondant à la condition d'initiation de la procédure d'accès aléatoire, l'au moins un paramètre comprenant un premier seuil correspondant à la condition d'initiation de la procédure d'accès aléatoire, et le premier seuil étant utilisé pour indiquer un premier temps d'attente maximum avant que le premier dispositif terminal ne réinitie la procédure d'accès aléatoire déclenchée par la condition ;
la réception, par le premier dispositif terminal, d'un paramètre d'indication de réduction de puissance en provenance d'un dispositif de réseau, le temps d'attente maximum avant qu'au moins un dispositif terminal ne réinitie une procédure d'accès aléatoire étant indiqué par le paramètre d'indication de réduction de puissance, et l'au moins un dispositif terminal comprenant le premier dispositif terminal ;
en réponse au fait que le temps d'attente maximum indiqué par le paramètre d'indication de réduction de puissance est supérieur ou égal à une durée correspondant au premier seuil, la détermination de manière aléatoire, par le premier dispositif terminal, d'un temps de réduction de puissance pendant la durée correspondant au premier seuil ;
en réponse au fait que le temps d'attente maximum indiqué par le paramètre d'indication de réduction de puissance est inférieur à la durée correspondant au premier seuil, la détermination de manière aléatoire, par le premier dispositif terminal, d'un temps de réduction de puissance dans les limites du temps d'attente maximum indiqué par le paramètre d'indication de réduction de puissance ; et
la réinitialisation (220), par le premier dispositif terminal, de la procédure d'accès aléatoire en fonction du temps de réduction de puissance.

2. Procédé selon la revendication 1, l'au moins un paramètre comprenant en outre une première probabilité, la première probabilité étant d'indiquer une probabilité que le temps de réduction de puissance est inférieur à un second temps d'attente maximum avant que la procédure d'accès aléatoire déclenchée par la condition soit réinitiée.

3. Procédé selon la revendication 2, comprenant en outre :
la détermination, par le premier dispositif terminal, du temps de réduction de puissance en fonction du paramètre d'indication de réduction de puissance, du premier seuil et de la première probabilité.

4. Procédé selon la revendication 3, le second temps d'attente maximum étant inférieur au temps d'attente maximum indiqué par le paramètre d'indication de réduction de puissance ; et
la détermination, par le premier dispositif terminal, du temps de réduction de puissance en fonction du paramètre d'indication de réduction de puissance, du premier seuil et de la première probabilité comprenant :
la détermination de manière aléatoire, par le premier dispositif terminal, d'une seconde durée en fonction du paramètre d'indication de réduction de puissance et de la première probabilité ; et
en réponse au fait que la seconde durée est supérieure au second temps d'attente maximum et à une durée correspondant au premier seuil, la détermination de manière aléatoire, par le premier dispositif terminal, du temps de réduction de puissance pendant la durée correspondant au premier seuil.

5. Procédé selon l'une quelconque des revendications 1 à 4, comprenant en outre :
en réponse au fait qu'une séquence de préambule envoyée par le premier dispositif terminal au dispositif de réseau est absente dans une réponse d'accès aléatoire, la détermination que le premier dispositif terminal échoue dans la procédure d'accès aléatoire ; ou
en réponse au fait qu'un échec de résolution de contention est déclaré dans une réponse de résolution de collision, la détermination que le premier dispositif terminal échoue dans la procédure d'accès aléatoire.

6. Dispositif terminal pour un accès aléatoire, le dispositif terminal étant un premier dispositif terminal et comprenant :
un module de détermination (310) comprenant un premier module de détermination, configuré pour : sous une condition que le premier dispositif terminal échoue dans une procédure d'accès aléatoire, déterminer, en fonction d'une condition d'initiation de la procédure d'accès aléatoire, au moins un paramètre correspondant à la condition d'initiation de la procédure d'accès aléatoire, l'au moins un paramètre comprenant un premier seuil correspondant à la condition d'initiation de la procédure d'accès aléatoire, et le premier seuil étant utilisé pour indiquer le premier temps d'attente maximum avant que le premier dispositif terminal ne réinitie la procédure d'accès aléatoire déclenchée par la condition ;
un module de réception, configuré pour recevoir un paramètre d'indication de réduction de puissance en provenance d'un dispositif de réseau, le temps d'attente maximum avant qu'au moins un dispositif terminal ne réinitie une procédure d'accès aléatoire étant indiqué par le paramètre d'indication de réduction de puissance, et l'au moins un dispositif terminal comprenant le premier dispositif terminal ;
le module de détermination (310) comprenant un second module de détermination, configuré pour : déterminer de manière aléatoire, en réponse au fait que le temps d'attente maximum indiqué par le paramètre d'indication de réduction de puissance est supérieur ou égal à une durée correspondant au premier seuil, un temps de réduction de puissance pendant la durée correspondant au premier seuil ;
déterminer de manière aléatoire, en fonction du fait que le temps d'attente maximum indiqué par le paramètre d'indication de réduction de puissance est inférieur à la durée correspondant au premier seuil, le temps de réduction de puissance à l'intérieur du temps d'attente maximum indiqué par le paramètre d'indication de réduction de puissance ; et
un module de communication (320), configuré pour réinitier la procédure d'accès aléatoire en fonction du temps de réduction de puissance.

7. Dispositif terminal selon la revendication 6, l'au moins un paramètre comprenant en outre une première probabilité, la première probabilité devant indiquer une probabilité que le temps de réduction de puissance est inférieur à un second temps d'attente maximum avant que la procédure d'accès aléatoire déclenchée par la condition ne soit réinitiée.

8. Dispositif terminal selon la revendication 7, la seconde unité de détermination étant configurée pour déterminer le temps de réduction de puissance en fonction du paramètre d'indication de réduction de puissance, du premier seuil et de la première probabilité.

9. Dispositif terminal selon la revendication 8, le second temps d'attente maximum étant inférieur au temps d'attente maximum indiqué par le paramètre d'indication de réduction de puissance.

10. Dispositif terminal selon la revendication 9, le second module de détermination étant configuré pour :
déterminer de manière aléatoire une seconde durée en fonction du paramètre d'indication de réduction de puissance et de la première probabilité ; et
déterminer de manière aléatoire, en réponse au fait que la seconde durée est supérieure au second temps d'attente maximum et à une durée correspondant au premier seuil, le temps de réduction de puissance pendant la durée correspondant au premier seuil.

11. Dispositif terminal selon l'une quelconque des revendications 6 à 10, le module de réception étant en outre configuré pour :
recevoir des informations de configuration envoyées par le dispositif de réseau, les informations de configuration comprenant des correspondances un à un entre une pluralité de conditions d'initiation des procédures d'accès aléatoire et une pluralité de seuils, et la pluralité de conditions d'initiation des procédures d'accès aléatoire comprenant la condition d'initiation de la procédure d'accès aléatoire.

12. Dispositif terminal selon l'une quelconque des revendications 6 à 11, le module de détermination (310) étant en outre configuré pour :
en réponse au fait qu'une séquence de préambule envoyée par le premier dispositif terminal au dispositif de réseau est absente dans une réponse d'accès aléatoire, déterminer que le premier dispositif terminal échoue dans la procédure d'accès aléatoire ; ou
en réponse au fait qu'un échec de résolution de contention est déclaré dans une réponse de résolution de collision, déterminez que le premier dispositif terminal échoue dans la procédure d'accès aléatoire.
